# EUROPEAN PATENT APPLICATION

(11) **EP 3 792 617 A1**
(43) Date of publication of application: **17.03.2021**
(21) Application number: 19196467.5
(22) Date of filing: 10.09.2019
(51) Int. Cl.: G01N 21/3554, G01N 21/84

(54) **APPARATUS FOR DETERMINING WATER CONTENT IN PLANTS**

(71) Applicant: Bayer AG, 51373 Leverkusen (DE)
(72) Inventor: Nicol, Andreas, 51061 Köln (DE)
(74) Representative: BIP Patents

(57) **Abstract**

The present invention relates to an apparatus (10) for determining water content in plants. The apparatus comprises at least one camera detector (20), at least two wavelength filters (30), and a processing unit (40). The at least one camera detector is configured to acquire at least two images of a scene within which at least part of a plant is located. The at least one camera detector is configured to acquire a first infrared image of the at least two images over a first infrared wavelength range associated with a first passband wavelength range of a first wavelength filter (32) of the at least two wavelength filters. The at least one camera detector is configured to acquire a second infrared image of the at least two images over a second infrared wavelength range associated with a second passband wavelength range of a second wavelength filter (34) of the at least two wavelength filters, and wherein the first wavelength range is different to the second wavelength range. The processing unit is configured to determine a measure of water content in the plant comprising utilization of a ratio of pixel values in the first infrared image with pixel values in the second infrared image. The processing unit is configured to utilize the determined measure of water content in the plant and a calibration for the plant to determine at least one quantitative value of water content for the plant.

## Description

### FIELD OF THE INVENTION

The present invention relates to an apparatus for determining water content in plants.

### BACKGROUND OF THE INVENTION

The general background of this invention is the non-invasive quantification of water in plants.

Water content in plants can be used as an indicator of stresses, such as physical and chemical changes in response to environmental factors, and application of different chemicals.

However, the manner in which this is done needs improving.

### SUMMARY OF THE INVENTION

It would be advantageous to have improved means for determining water content in plants.

The object of the present invention is solved with the subject matter of the independent claims, wherein further embodiments are incorporated in the dependent claims.

In an aspect, there is provided an apparatus for determining water content in plants, the apparatus comprising:
- at least one camera detector;
- at least two wavelength filters; and
- a processing unit.

The at least one camera detector is configured to acquire at least two images of a scene within which at least part of a plant is located. The at least one camera detector is configured to acquire a first infrared image of the at least two images over a first infrared wavelength range associated with a first passband wavelength range of a first wavelength filter of the at least two wavelength filters. The at least one camera detector is configured to acquire a second infrared image of the at least two images over a second infrared wavelength range associated with a second passband wavelength range of a second wavelength filter of the at least two wavelength filters. The first wavelength range is different to the second wavelength range. The processing unit is configured to determine a measure of water content in the plant comprising utilization of a ratio of pixel values in the first infrared image with pixel values in the second infrared image. The processing unit is configured to utilize the determined measure of water content in the plant and a calibration for the plant to determine at least one quantitative value of water content for the plant.

Thus, infrared image data over different wavelength ranges has values of the ratio of which between different ranges can be used with a previously generated calibration to determine a quantitative value of water content in the plant. This has utility in herbicide, fungicide, and insecticide screening and for plant breeding. The water content is determined faster than previous techniques, with a system that is light weight and low in cost.

In an example, the calibration comprises a plurality of quantitative values of water content as a function of plurality of measures of water content.

Thus, in effect a look up table or calibration curve is utilized in order to covert the ratio value to a quantitative value of water content.

In an example, the processing unit is configured to utilize an identification of the plant to select the calibration for the plant from a plurality of calibrations for a plurality of different plants.

In this manner, a whole series of calibration curves or look up tables can be stored and the correct one selected for the specific plant being interrogated in order to determine the quantitative water content value.

In an example, the identification of the plant is provided as user input.

In an example, the processing unit is configured to implement a machine learning algorithm to analyse at least one image of the at least two images to determine the identification of the plant.

In an example, the at least two images comprises at least three images. The at least one camera detector is configured to acquire the at third image as a broadband image of the scene within which the at least part of the plant is located. The processing unit is configured to utilize the third image to determine the identification of the plant.

Thus, a dedicated image, that could be high resolution and/or have a higher signal to noise to the first and second infrared images can be utilized as an image for determination of the plant type, leading to a more accurate plant type determination.

In an example, determination of the measure of water content comprises a segmentation of the at least part of the plant in the first infrared image and a segmentation of the at least part of the plant in the second infrared image.

In an example, the at least two images comprises at least three images. The at least one camera detector is configured to acquire a broadband image of the scene within which the at least part of the plant is located. The processing unit is configured to segment the at least part of the plant in the broadband image and utilize this segmentation to segment the at least part of the plant in the first infrared image and the second infrared image.

In this manner, a high fidelity image can be used to determine for example the border between leaves and the background soil, and/or determine leaves with respect to stems. This enables the correct parts of imagery in the first infrared image and second infrared image to be segmented, thereby increasing signal to noise because only the required parts of the image, such as the leaves can be analysed, with background such as soil, or plant stems being discounted. Images can be registered between the first, second and third images in known manners, and where the third image can simply be an image acquired without a filter in place or acquired by a separate camera such as an optical camera.

In an example, the apparatus is configured to acquire the first infrared image and subsequently the second infrared image with the same camera.

Thus, for example a filter wheel approach can be used to place different filters in turn in front of an imaging detector.

In an example, the apparatus is configured to acquire the first infrared image and the second infrared image with different camera detectors.

In this way, the images can be acquired at the same time. For example, two different cameras can be used looking at the same feature on the ground. Or, a single camera can be used with one imaging axis utilized, but with a beam-splitter approach used with different wavelength filters placed used in associated with two different detectors to simultaneously acquire the two image from exactly the same view point.

In an example, the apparatus is configured to acquire the first infrared image and the second infrared image at the same time.

In an example, the different camera detectors are in different cameras.

In an example, the different camera detectors are in the same camera, and wherein a beam splitting system is used to direct radiation to the different camera detectors.

In an example, the first infrared wavelength range is associated with an absorption band of water, and the second infrared wavelength range is not associated with an absorption band of water.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic example of an apparatus for determining water content in plants;
Fig. 2 shows a schematic example of an apparatus for determining water content in plants;
Fig. 3 shows a schematic example of an apparatus for determining water content in plants;
Fig. 4 shows a schematic example of an apparatus for determining water content in plants; and
Fig. 5 shows a schematic example of an apparatus for determining water content in plants.

### DETAILED DESCRIPTION OF EMBODIMENTS

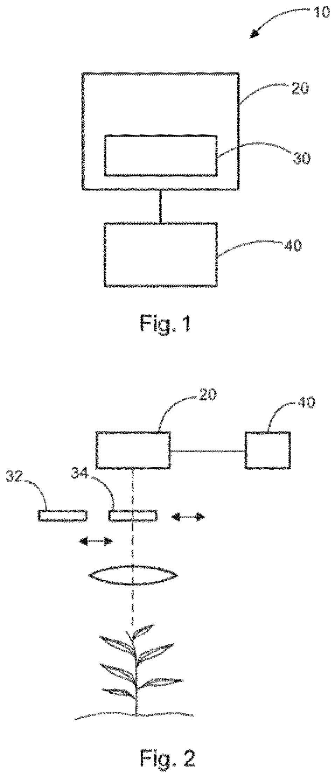

Fig. 1 shows an example of an apparatus 10 for determining water content in plants. The apparatus comprises at least one camera detector 20, at least two wavelength filters 30, and a processing unit 40. The at least one camera detector is configured to acquire at least two images of a scene within which at least part of a plant is located. The at least one camera detector is configured to acquire a first infrared image of the at least two images over a first infrared wavelength range associated with a first passband wavelength range of a first wavelength filter 32 of the at least two wavelength filters. The at least one camera detector is configured to acquire a second infrared image of the at least two images over a second infrared wavelength range associated with a second passband wavelength range of a second wavelength filter 34 of the at least two wavelength filters. The first wavelength range is different to the second wavelength range. The processing unit is configured to determine a measure of water content in the plant comprising utilization of a ratio of pixel values in the first infrared image with pixel values in the second infrared image. The processing unit is configured also to utilize the determined measure of water content in the plant and a calibration for the plant to determine at least one quantitative value of water content for the plant.

In an example, an output unit 50 is configured to output the at least one quantitative value of water content.

In an example, the at least one quantitative value of water content comprises a plurality of quantitative values of water content for different parts of the at least part of the plant.

In an example, the plurality of quantitative values of water content are associated with different pixels in the first image and/or second image.

According to an example, the calibration comprises a plurality of quantitative values of water content as a function of plurality of measures of water content.

According to an example, the processing unit is configured to utilize an identification of the plant to select the calibration for the plant from a plurality of calibrations for a plurality of different plants.

According to an example, the identification of the plant is provided as user input.

According to an example, the processing unit is configured to implement a machine learning algorithm to analyse at least one image of the at least two images to determine the identification of the plant.

In an example, the machine learning algorithm is a trained neural network. Thus, a neural network can be trained on imagery of a whole series of plants for which water concentration calibration data is available. Then, from imagery the plant being interrogated can be automatically determined and the correct calibration selected.

According to an example, the at least two images comprises at least three images, wherein the at least one camera detector is configured to acquire the at third image as a broadband image of the scene within which the at least part of the plant is located. The processing unit is configured to utilize the third image to determine the identification of the plant.

In an example, the third image is acquired by a camera detector utilized to acquire the first infrared image and/or the second infrared image with none of the at least two wavelength filters utilized.

In an example, the third image is acquired by an optical camera detector.

According to an example, determination of the measure of water content comprises a segmentation of the at least part of the plant in the first infrared image and a segmentation of the at least part of the plant in the second infrared image.

According to an example, the at least two images comprises at least three images, wherein the at least one camera detector is configured to acquire a broadband image of the scene within which the at least part of the plant is located. The processing unit is configured to segment the at least part of the plant in the broadband image and utilize this segmentation to segment the at least part of the plant in the first infrared image and the second infrared image.

In an example, the third image is acquired by a camera detector utilized to acquire the first infrared image and/or the second infrared image with none of the at least two wavelength filters utilized.

In an example, the third image is acquired by an optical camera detector.

According to an example, the apparatus is configured to acquire the first infrared image and subsequently the second infrared image with the same camera.

According to an example, the apparatus is configured to acquire the first infrared image and the second infrared image with different camera detectors.

According to an example, the apparatus is configured to acquire the first infrared image and the second infrared image at the same time.

According to an example, the different camera detectors are in different cameras.

According to an example, the different camera detectors are in the same camera, and wherein a beam splitting system is used to direct radiation to the different camera detectors.

According to an example, the first infrared wavelength range is associated with an absorption band of water, and the second infrared wavelength range is not associated with an absorption band of water.

Thus, water content can be determined in a new way, which can involve sensor fusion of the obtained water content imagery by generating overlays with other imagery/data (e. g. RGB, thermal, hyperspectral, fluorescence, 3D point clouds, etc.).

Fig. 2 shows a specific example of the apparatus imaging a plant, where the two filters 32 and 34 can alternately be positioned in front of the camera to capture imagery of the plant over different wavelength ranges, and capture a broadband image with both filters removed.

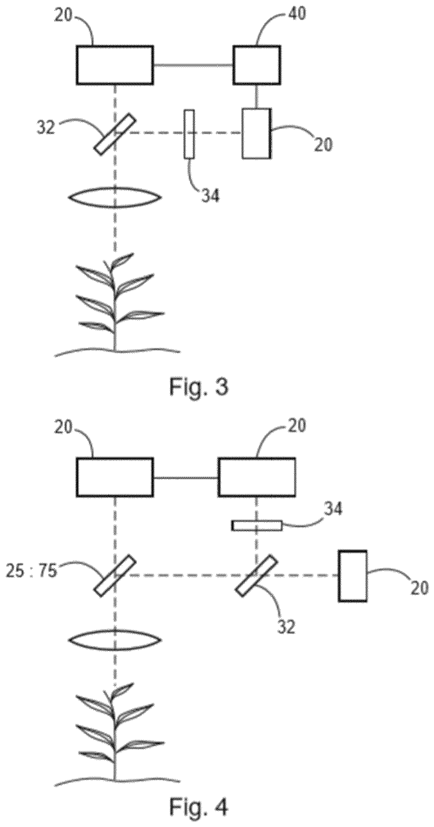

Fig. 3 shows a specific example of the apparatus imaging a plant, where filter 32 is used as a beam-splitter with the radiation passing through it having a narrow wavelength range that is captured by a detector. The radiation reflected by the first filter 32 has a broad wavelength, except for that selected by filter 32, and this interacts with filter 34 that allows radiation over a second narrow band to be detected by a second detector. Thus, the two detectors can operate simultaneously to capture images of the same view of the plant in a single camera unit.

Fig. 4 shows a specific example of the apparatus imaging a plant. Here a first broadband beam splitter is used to obtain a first broadband image behind it. The filter here is a 25:75 splitter, but other splitters such as 50:50, 10:90 can be used for example. The broadband radiation reflected from the beam-splitter progresses to filter 32, where filter 32 is used as a beam-splitter with the radiation passing through it having a narrow wavelength range that is captured by a detector. The radiation reflected by the filter 32 has a broad wavelength, except for that selected by filter 32, and this interacts with filter 34 that allows radiation over a second narrow band to be detected by a second detector. Thus, the three detectors can operate simultaneously to capture images of the same view of the plant in a single camera unit in a broadband mode, and over two separate narrowband wavelength ranges.

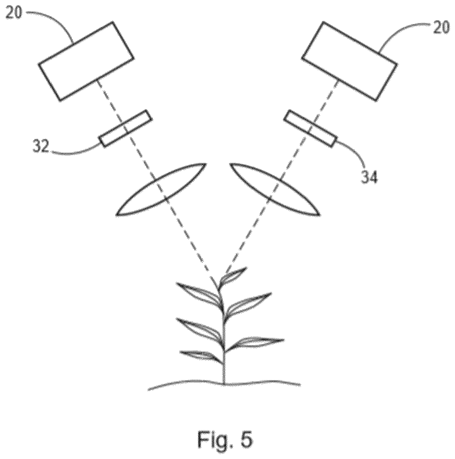

Fig. 5 shows a specific example of the apparatus imaging a plant. Here in effect two separate cameras are used, imaging the plant from different directions, where in one optical path a first filter 32 is used, whilst in the optical path of the other camera a second filter 34 is used.

The infrared cameras described above can be near infrared or short wave infrared or extend over a broad infrared range.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus (10) for determining water content in plants, the apparatus comprising:
- at least one camera detector (20);
- at least two wavelength filters (30); and
- a processing unit (40);
wherein, the at least one camera detector is configured to acquire at least two images of a scene within which at least part of a plant is located;
wherein, the at least one camera detector is configured to acquire a first infrared image of the at least two images over a first infrared wavelength range associated with a first passband wavelength range of a first wavelength filter (32) of the at least two wavelength filters;
wherein, the at least one camera detector is configured to acquire a second infrared image of the at least two images over a second infrared wavelength range associated with a second passband wavelength range of a second wavelength filter (34) of the at least two wavelength filters, wherein the first wavelength range is different to the second wavelength range;
wherein, the processing unit is configured to determine a measure of water content in the plant comprising utilization of a ratio of pixel values in the first infrared image with pixel values in the second infrared image;
wherein, the processing unit is configured to utilize the determined measure of water content in the plant and a calibration for the plant to determine at least one quantitative value of water content for the plant.

2. Apparatus according to 1, wherein the calibration comprises a plurality of quantitative values of water content as a function of plurality of measures of water content.

3. Apparatus according to any of claims 1-2, wherein the processing unit is configured to utilize an identification of the plant to select the calibration for the plant from a plurality of calibrations for a plurality of different plants.

4. Apparatus according to claim 3, wherein the identification of the plant is provided as user input.

5. Apparatus according to claim 3, wherein the processing unit is configured to implement a machine learning algorithm to analyse at least one image of the at least two images to determine the identification of the plant.

6. Apparatus according to claim 5, wherein the at least two images comprises at least three images, wherein the at least one camera detector is configured to acquire the at third image as a broadband image of the scene within which the at least part of the plant is located, and wherein the processing unit is configured to utilize the third image to determine the identification of the plant.

7. Apparatus according to any of claims 1-6, wherein determination of the measure of water content comprises a segmentation of the at least part of the plant in the first infrared image and a segmentation of the at least part of the plant in the second infrared image.

8. Apparatus according to claim 7, wherein the at least two images comprises at least three images, wherein the at least one camera detector is configured to acquire a broadband image of the scene within which the at least part of the plant is located, and wherein the processing unit is configured to segment the at least part of the plant in the broadband image and utilize this segmentation to segment the at least part of the plant in the first infrared image and the second infrared image.

9. Apparatus according to any of claims 1-8, wherein the apparatus is configured to acquire the first infrared image and subsequently the second infrared image with the same camera.

10. Apparatus according to any of claims 1-9, wherein the apparatus is configured to acquire the first infrared image and the second infrared image with different camera detectors.

11. Apparatus according to claim 10, wherein the apparatus is configured to acquire the first infrared image and the second infrared image at the same time.

12. Apparatus according to any of claims 10-11, wherein the different camera detectors are in different cameras.

13. Apparatus according to any of claims 10-11, wherein the different camera detectors are in the same camera, and wherein a beam splitting system is used to direct radiation to the different camera detectors.

14. Apparatus according to any of claims 1-13, wherein the first infrared wavelength range is associated with an absorption band of water, and the second infrared wavelength range is not associated with an absorption band of water.
